Europäisches Patentamt

European Patent Office

Office européen des brevets

(19)

(11) Publication number : **0 468 939 A2**

## (12) EUROPEAN PATENT APPLICATION

(21) Application number : **91830330.6**

(22) Date of filing : **24.07.91**

(51) Int. Cl.⁵ : **C09D 5/00**

(30) Priority : **25.07.90 IT 361690**
**15.02.91 IT 4491 U**

(43) Date of publication of application :
**29.01.92 Bulletin 92/05**

(84) Designated Contracting States :
**AT CH DE DK ES FR GB GR IT LI NL SE**

(71) Applicant : **Camerini, Gian Piero**
**Via D'Azeglio 32**
**I-40100 Bologna (IT)**

(72) Inventor : **Camerini, Gian Piero**
**Via D'Azeglio 32**
**I-40100 Bologna (IT)**

(74) Representative : **Coppi, Cecilia**
**Via Oblach No. 1**
**I-40141 Bologna (IT)**

(54) **Repellent paint specially used in snail farming and for controlling harmful insects.**

(57)    Repellent paint specially used in snail farming and for controlling harmful insects, comprising - in addition to vinyl adhesive, lemon juice, zinc ethylene-bis-dicarbonate, zinc metalorganic compounds, copper salts and micronised sulphur - magnesium carbonate, calcium carbonate, fine salt, a naphthalene compound, camphor, magnesium sulphate, and also turpentine, classified lime, gypsum powder and coffee powder, the whole being mixed in predetermined quantities.

EP 0 468 939 A2

The present invention relates to a repellent paint for use in snail farming but also in agriculture for preventing slugs from attacking vegetables and/or flowers, and controlling harmful insects.

To overcome these disadvantages, use is currently made of products intended to eliminate molluscs, especially poisons, which certainly achieve the object of saving fields from destruction, but also cause snails to disappear, which is highly detrimental where the snails are intended for use as food.

This is because the products usually used are not selective and therefore destroy both the snail of the genus Helix and the slug (without a shell) of the genus Airon.

Furthermore it has been observed, especially along roads running through woods, that thousands of snails are squashed by motor vehicles - a serious problem from the ecological point of view, since in some areas snails are in danger of becoming wholly extinct, with no way of safeguarding the species.

In the farming of snails for food, one of the problems most reluctant of solution is that of the system of enclosure, which is indispensable to prevent the snails from escaping from the proper farm area.

Two main systems of external enclosure are currently used for this purpose:
– use of fibreglass reinforced plastic combined with low-voltage electric wires;
– use of galvanised sheet metal, treated on the outside with bituminous paint.

Said systems certainly solve the problem of snails escaping from the enclosure, but both have the disadvantages that they are neither cheap nor easy to install.

It is an object of the present invention to enable a paint to be produced that has the characteristic of being repellent to snails and, when applied to the enclosures, of preventing said nails from escaping, being usable also along the edges of roads to prevent snails from getting squashed by vehicles.

It is a further object of the present invention for said paint also to be used for keeping away harmful insects, such as ants, termites and so on, not only for example from beehives, but also from domestic residences and from any structure that many be attacked by insects, spiders, etc.

These and other objects are achieved with the paint forming the subject of the present invention which is characterised in that it is a mixture formed from vinyl adhesive and lemon juice, to which is added zinc ethylene-bis-dicarbonate, and a formulation containing various chemical species: active principles based on zinc metalorganic components and copper salts having fungicidal characteristics of low toxicity and micronised sulphur, the whole being in predetermined quantities.

An improvement to the composition of said repellent paint consists in the addition of magnesium carbonate, calcium carbonate, fine salt, a naphthalene compound, camphor, magnesium sulphate, turpentine, classified lime, gypsum powder and coffee powder.

The repellent paint is made up of 1 kg of vinyl adhesive, 40 to 80 g of lemon juice, 5 to 15 g of zinc ethylene-bis-dicarbonate, zinc metalorganic compounds and copper salts, and 5 to 15 g of micronised sulphur.

To this basic composition are added: 0.1% of magnesium carbonate and calcium carbonate, 5 to 20 g of fine salt, 5 to 15 g of a compound formed from naphthalene, camphor and magnesium sulphate, 5 to 20 g of turpentine, 5 to 20 g of classified lime, 5 to 150 g of gypsum powder, and approximately 20 g of coffee powder.

This paint is very simple to use because approximately 100 grams of water are added per kg, as is usual with conventional paints, and this is then applied in precise brush strokes of 2 or 3 cm. Said paint also has the advantage of being highly resistant, because within about 2 hours a film forms on the surface: in this way the paint does not lose its power and is not affected by climatic factors such as sun, rain and the like.

Moreover, on average, an amount equal to 500-600 g of paint is sufficient for an area of 1000 $m^2$.

This makes the system inexpensive and extremely simple to apply.

The paint in question gives better results if applied preferably on PVC laminate.

This is because said laminate has very advantageous characteristics in that it does not rust, is non-deformable, and is lighter than galvanised sheet metal. This makes it ideal both for farms already in existence using conventional methods, and for enclosed farms using a double plastic cage as already used in certain farms.

The abovementioned paint may, however, be used on metals, ceramics, glass, asphalt and the like, and lasts, if properly applied, approximately one year.

The active principles of the mixture forming the paint could be melted and mixed in with the PVC in the moulds to produce a plastic laminate impregnated with substances repellent to snails, slugs and other harmful insects.

The present invention achieves the intended objects: in particular it prevents snails getting away from their farms or into areas which may be dangerous for them, in addition to preventing infestations of harmful insects, such as termites and the like, which depending on their species build their nests in the walls of residences or destroy crops.

## Claims

1. Repellent paint specially used in snail farming and for controlling harmful insects, characterised in that it consists of a mixture of vinyl adhesive, lemon juice, zinc ethylene-bis-dicarbonate and a formulation containing various chemical species: active principles based on zinc metalorganic compounds and copper salts having fungicidal characteristics of low toxicity and micronised sulphur.

2.  Repellent paint according to Claim 1, characterised in that the following are added to the basic composition: magnesium carbonate, calcium carbonate, fine salt, a naphthalene compound, camphor, magnesium sulphate, and also turpentine, classified lime, gypsum powder and coffee powder, the whole being mixed in predetermined quantities.

3.  Repellent paint according to Claims 1 and 2, characterised in that it is applied preferably, but not exclusively, on laminate made of PVC.